(19) Europäisches Patentamt

European Patent Office

Office européen des brevets

(11) **EP 1 459 636 B1**

(12) **FASCICULE DE BREVET EUROPEEN**

(45) Date de publication et mention
de la délivrance du brevet:
**14.06.2006 Bulletin 2006/24**

(51) Int Cl.:
*A23L 2/74* *(2006.01)*       *B01D 61/14* *(2006.01)*

(21) Numéro de dépôt: **04360028.7**

(22) Date de dépôt: **16.03.2004**

(54) **Procédé de réduction contrôlée de la teneur en sucre de jus de fruits et dispositif pour la mise en oeuvre de ce procédé**

Verfahren zur kontrollierten Verringerung des Zuckers in Fruchtsäften und Vorrichtung für dieses Verfahren

Process for the controlled reduction of the level of sugar in fruit juices and installation for that process

(84) Etats contractants désignés:
**ES FR GR IT PT**

(30) Priorité: **19.03.2003 FR 0303372**

(43) Date de publication de la demande:
**22.09.2004 Bulletin 2004/39**

(73) Titulaire: **VASLIN BUCHER (S.A.)**
**49290 Chalonnes sur Loire (FR)**

(72) Inventeurs:
• **Bonnet, Jean**
**49100 Angers (FR)**

• **De Vilmorin, Hervé**
**33000 Bordeaux (FR)**

(74) Mandataire: **Nuss, Pierre et al**
**Cabinet Nuss**
**10, rue Jacques Kablé**
**67080 Strasbourg Cédex (FR)**

(56) Documents cités:
**EP-A- 1 005 795          CH-A- 682 636**
**US-A- 5 403 604          US-A- 5 496 577**
**US-A- 5 510 125          US-A1- 2002 197 380**

EP 1 459 636 B1

**Description**

La présente invention concerne le traitement de liquides alimentaires, notamment en vue de la modification au moins partielle de leurs compositions, en particulier par ajustement de la teneur de l'un de leurs constituants, et a pour objet un procédé de réduction contrôlée de la teneur en sucre de jus.

En effet, il est connu que certains jus de fruits, en particulier les jus de raisins, peuvent contenir des quantités très importantes de sucres. Ceci limite leurs possibilités de consommation comme jus de fruit et complique considérablement leur éventuelle transformation en vin. La fermentation alcoolique complète de ces jus très sucrés est difficile, elle nécessite une bonne maîtrise oenologique et s'accompagne souvent de déviations microbiologiques indésirables (teneurs en acide acétique importantes).

De plus, les vins obtenus ont des teneurs en alcool éthylique souvent supérieures à 15 % en volume, ce qui gêne leur distribution. Généralement, les consommateurs, apprécient peu les vins, surtout les vins rouges, contenant plus de 13 % d'alcool.

Certains producteurs de vins, en particulier aux USA, sont ainsi contraints à désalcooliser partiellement leurs vins pour pourvoir les vendre. Les techniques utilisées présentent des inconvénients importants. En effet, outre leur complexité (filtration sur membranes très serrées + distillation), elles peuvent altérer profondément la qualité et le goût du vin.

Il est bien évident qu'il serait préférable de retirer du sucre au moût de raisin avant fermentation plutôt que de l'alcool après fermentation, mais, à ce jour, il n'existe pas de technique industrielle connue permettant de réaliser cette opération pour un coût acceptable.

Il était donc souhaitable de mettre au point une technique simple permettant de retirer une quantité pré-déterminée de sucre à un jus de fruit, en général, et à du jus de raisin, en particulier. Des techniques dans le même but sont décrites dans les documents US 5 403 604 et US 5 510 125.

En vue de répondre à cette demande, la présente invention propose un procédé de réduction contrôlée de la teneur en sucres de jus de fruits, en particulier de jus de raisins, caractérisé en ce qu'il consiste à soumettre une partie au moins du jus de fruits originel, éventuellement préclarifié, à une ultrafiltration sélective sensiblement perméable aux sucres, puis à une nanofiltration sélective sensiblement imperméable aux sucres, et à mélanger le perméat doublement filtré avec le rétentat ou concentré de l'ultrafiltration et, éventuellement, avec la partie du jus de fruits originel non traité, le perméat d'ultrafiltration étant soumis à un traitement en vue d'éliminer ou de limiter les phénomènes de cristallisation (s) dans le rétentat ou concentré de nano-filtration.

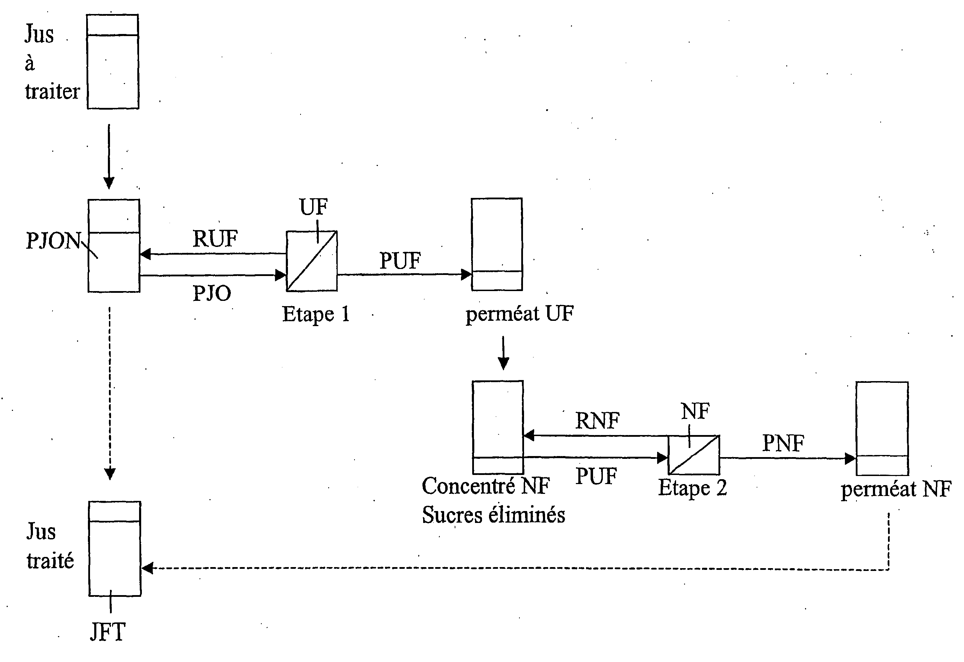

L'invention sera mieux comprise, grâce à la description ci-après, qui se rapporte à un mode de réalisation préféré, donné à titre d'exemple, et expliqué avec référence au dessin schématique annexé dont la figure unique est une représentation schématique d'un dispositif pour la mise en oeuvre du procédé selon l'invention, illustrant également les principales étapes de ce dernier.

Comme indiqué précédemment, le procédé selon l'invention consiste principalement à soumettre une partie PJO au moins du jus de fruits originel, éventuellement préclarifié, à une ultrafiltration sélective sensiblement perméable aux sucres, puis à une nanofiltration sélective sensiblement imperméable aux sucres, et à mélanger le perméat doublement filtré PNF avec le rétentat ou concentré de l'ultrafiltration RUF et, éventuellement, avec la partie du jus de fruits originel non traité PJON, le perméat d'ultrafiltration PUF étant soumis à un traitement en vue d'éliminer ou de limiter les phénomènes de cristallisation(s) ou de formation de troubles dans le rétentat ou concentré de nano-filtration RNF.

Le traitement précité permet de prévenir les problèmes liés à la modification des teneurs en substances dissoutes après l'ultrafiltration et pouvant aboutir à des phénomènes de colmatage et/ou d'obturation des moyens de nanofiltration.

De manière plus précise, ledit procédé peut essentiellement comprendre les étapes consistant à :

- prélever une partie PJO du jus originel, éventuellement préclarifié ;
- soumettre ladite partie de jus PJO prélevée à une ultrafiltration sélective générant un rétentat ou concentré RUF et un perméat PUF, l'ultrafiltration mise en oeuvre étant sensiblement perméable aux sucres et fortement imperméable aux autres substances qualitatives du jus, en suspension et/ou dissoutes dans ce dernier ;
- soumettre le perméat d'ultrafiltration PUF, après son traitement préventif contre les phénomènes de cristallisation (s) ou de formation de troubles, à une nanofiltration sélective générant un rétentat ou concentré RNF et un perméat PNF, le moyen NF de nano-filtration mis en oeuvre étant fortement imperméable aux sucres et sensiblement perméable aux autres substances qualitatives, en suspension et/ou dissoutes, du perméat d'ultrafiltration PUF;
- mélanger le rétentat ou concentré d'ultrafiltration RUF et le perméat de nanofiltration PNF à la partie du jus originel non prélevée PJON, pour former un jus de fruits traité JFT à teneur en sucres réduite.

De manière pratique et pour des types donnés de moyens d'ultrafiltration UF et de nanofiltration NF, la quantité de sucres éliminée, et donc la réduction de sucres dans le jus de fruits après traitement, peuvent être avantageusement contrôlées par le réglage du volume de perméat d'ultrafiltration PUF.

Le traitement du perméat d'ultrafiltration PUF mentionné ci-dessus peut, par exemple, consister en une étape opératoire choisie dans le groupe formé par : la précipitation préventive de l'un au moins des composés intervenant dans le ou chaque phénomène de cristallisation(s) ou de formation de troubles par ajout contrôlé d'au moins une substance adaptée dans le perméat d'ultrafiltration PUF ; l'inhibition du ou des phénomène(s) de cristallisation(s) ou de formation de troubles par ajout contrôlé d'au moins une substance adaptée dans le perméat d'ultrafiltration PUF ; la limitation du ou des phénomène(s) de cristallisation ou de formation de troubles concerné(s) par ajout contrôlé d'au moins un produit stabilisant dans le perméat d'ultrafiltration ; l'empêchement de la ou des cristallisation(s) ou formation de troubles par ajout contrôlé d'au moins un produit gélifiant et l'appauvrissement, par exemple par traitement au moyen de résines échangeuses d'ions ou par électrodialyse, du perméat d'ultrafiltration PUF par rapport à l'un au moins des composés intervenant dans le ou chaque phénomène de cristallisation ou de formation de troubles concerné.

Ledit au moins un produit ajouté, par exemple par injection éventuellement suivi d'une agitation, peut consister en un produit stabilisant colloïdal, tel que par exemple de l'acide métatartrique, un dérivé cellulosique, de la gomme arabique, de la gomme xanthane ou analogues ou être un produit gélifiant choisi dans le groupe formé par les gélatines, les alginates et analogues.

En vue d'une valorisation des substances éliminées par l'intermédiaire du procédé selon l'invention, il peut en outre être prévu de soumettre à une opération de traitement supplémentaire et/ou de conditionnement le concentré ou rétentat RNF provenant de l'opération de nanofiltration sélective.

Selon une première variante de réalisation de l'invention, le procédé peut être exécuté de manière continue, au moins deux des différentes phases opératoires étant effectuées de manière simultanée et le prélèvement étant réalisé pendant une durée déterminée.

Selon une seconde variante de réalisation de l'invention, le procédé peut être exécuté de manière séquentielle, les différentes phases opératoires étant effectuées à la suite les unes des autres en étant appliquées à une partie du volume du jus originel prélevée en début du cycle opératoire du procédé.

Comme cela ressort du développement ci-dessus, le procédé proposé par l'invention utilise deux étapes de filtrations successives :

- première étape : ultrafiltration UF d'une partie du volume de jus de raisin à traiter, éventuellement préclarifiée. On obtient un perméat d'UF très dépouillé (la plus grande partie des colloïdes et des composés phénoliques est retenue) dont la teneur en sucres dépend de la teneur en sucres du jus de raisin et de la membrane d'UF utilisée. Le volume de perméat extrait doit correspondre à la quantité de sucres qui doit être éliminée (voir ci-après calcul du volume de perméat UF).
- deuxième étape : nanofiltration NF du perméat UF obtenu dans la première étape, après son traitement préventif contre les cristallisations et/ou les formations de troubles. On obtient un concentré ou rétentat de NF riche en sucres et un perméat de NF pauvre en sucres et relativement riche en acides et autres constituants qualitatifs du jus initial. La limite de la concentration NF dépend de la membrane et des conditions opératoires. Il est difficile de dépasser 500 g de sucres par litre. Le perméat NF est réincoporé à la cuve de jus de raisin à traiter. Le concentré NF correspond aux sucres éliminés de la cuve.

La mise en oeuvre industrielle du procédé ne présente pas de difficulté particulière. Des gammes de filtres acceptant des modules d'ultrafiltration ou de nanofiltration sont connues et largement utilisées dans l'industrie agroalimentaire.

L'efficacité du procédé dépend de la qualité des membranes utilisées, c'est-à-dire de leurs sélectivités par rapport aux différents constituants du jus de fruit traité. Cette sélectivité s'exprime par les taux de rejets relatifs à chaque constituant.

La membrane d'UF doit avoir un faible taux de rejet pour les sucres et des forts taux de rejets pour les autres constituants : l'objectif est d'extraire préférentiellement les sucres.

La membrane de NF doit avoir un fort taux de rejet pour les sucres et des taux de rejets faibles pour les autres constituants : l'objectif est d'extraire préférentiellement tout ce qui n'est pas sucre.

L'estimation des volumes de perméat d'UF et de concentré NF peut être réalisé comme suit :

Si W est le volume de jus à traiter en litres, X la quantité de sucres à retirer en g/l, et Y et Z les teneurs en sucres en g/l respectivement des perméat UF et perméat NF, le volume V de perméat UF est environ égal à:

$$V = X x W / (Y-Z)$$

Exemple : W = 1000 1, X = 25 g/l, Y = 180 g/l, Z = 50 g/l V = 25000/130 = 192 1

Si la teneur en sucres du concentré NF en fin de traitement est égale à 500 g/lle volume de ce concentré sera égal à : XxW / 500

soit, pour l'exemple ci-dessus : 25000/500 = 501.

Un exemple de performance pour jus de raisin est présenté dans le tableau ci-après, à titre d'exemple.

Membranes utilisées :

UF : module spiralé référence PW de la société Désal Osmonics

NF : module spiralé référence DK de la société Désal Osmonics

| | Volume 1 | Sucres g/l | Acidité totale G/l $H_2 SO_4$ | pH | Potassium mg/l | Indice Composés Phénoliques Totaux |
|---|---|---|---|---|---|---|
| Jus initial (PJO) | 1000 | 250** | 4,8 | 3,84 | 1619 | 12,9 |
| UF concentré (RUF) | 800 | 251 | 4,85 | 3,84 | 1660 | 12,6 |
| UF perméat (PUF) | 200 | 245 | 4,7 | 3,83 | 1611 | 8,8 |
| NF concentré* (RNF) | 92 | 500 | 5,87 | 3,92 | 2460 | 10,7 |
| NF perméat (PNF) | 108 | 26 | 3,2 | 3,70 | 1081 | 1,4 |
| Jus traité (JFT) | 908 | 224*** | 4,7 | 3,84 | 1538 | 13 |
| * Stabilisé à la CMC, voir ci-dessous<br>* * Degré alcoolique correspondant : 15 %<br>*** Degré alcoolique correspondant : 13,5 % | | | | | | |

Résultats :

- le degré alcoolique potentiel du moût a été baissé de 15 à 13,5
- Les analyses des autres constituants du moût montrent peu de différence entre les compositions du moût avant et après traitement. La qualité du moût ne semble donc pas affectée par la diminution du degré alcoolique potentiel.
- les sucres éliminés (concentré NF) correspondent à une perte de volume de moût égale à 9,2 % . Ces sucres peuvent être valorisés, ils représentent 46 kg pour les 1000 l de moût traités.

Il convient de noter que la forte augmentation de la teneur en potassium et en acide tartrique du concentré de NF lors du traitement peut provoquer une cristallisation de bitartrate de potassium qui peut gêner et limiter la concentration par NF, à cause du risque de bouchage des membranes de NF.

Pour prévenir ce phénomène de cristallisation de sels tartriques, le procédé proposé préconise plusieurs techniques.

On peut, par exemple, en fonction des réglementations locales sur les traitements ou sur les produits utilisables :

- faire précipiter préventivement les sels de potassium en acidifiant, à l'acide tartrique, le perméat UF et en le refroidissant. La séparation des cristaux peut se faire par un simple tamisage fin, par exemple avec un tamis 50 $\mu$m.
- inhiber la cristallisation par ajout d'acide métatartrique ou de dérivés cellulosiques, carboxyméthylcellulose (CMC) par exemple, ou tout autre produit (ou association de produits) aux propriétés équivalentes.
- limiter la cristallisation de sels en ajoutant un produit stabilisant colloïdal type gomme arabique, gomme xanthane, ou tout autre produit (ou association de produits) aux propriétés équivalentes.
- empêcher la cristallisation en ajoutant un produit gélifiant type gélatine, alginate, ou tout autre produit (ou association de produits) aux propriétés équivalentes.
- appauvrir le perméat d'UF en ions $K^+$ en le traitant par des résines échangeuses cationiques, ou par électrodialyse. Ces types de traitements sont bien connus de l'homme du métier.

Les produits stabilisants ou/et gélifiants utilisés ne peuvent pas traverser la membrane de NF, ils sont donc concentrés dans le sirop de sucre (concentré NF) éliminé.

La présente invention à également pour objet, comme le montre de manière schématique la figure du dessin annexé, un dispositif pour la mise en oeuvre du procédé décrit ci-dessus.

Ce dispositif est caractérisé en ce qu'il comprend principalement un module d'ultrafiltration UF sensiblement perméable aux sucres et un module de nanofiltration NF sensiblement imperméable aux sucres, montés en cascade, ainsi que des moyens pour le traitement du perméat d'ultrafiltration PUF en vue de l'élimination ou de la limitation au moins des phénomènes de cristallisation(s) ou de formation de troubles dans le rétentat de nanofiltration RNF, le module d'ultrafiltration UF étant alimenté par des moyens de prélèvement de jus à traiter et les modules d'ultrafiltration UF et de nanofiltration NF étant pourvus de moyens de déversement, respectivement de concentré ou de rétentat d'ultrafiltration RUF et de perméat de nanofiltration PNF.

**Revendications**

1. Procédé de réduction contrôlée de la teneur en sucres de jus de fruits, en particulier de jus de raisins, **caractérisé en ce qu'**il consiste à soumettre une partie (PJO) au moins du jus de fruits originel, éventuellement préclarifié, à une ultrafiltration sélective sensiblement perméable aux sucres, puis à une nanofiltration sélective sensiblement imperméable aux sucres, et à mélanger le perméat doublement filtré (PNF) avec le rétentat ou concentré de l'ultrafiltration (RUF) et, éventuellement, avec la partie du jus de fruits originel non traité (PJON), le perméat d'ultrafiltration (PUF) étant soumis à un traitement en vue d'éliminer ou de limiter les phénomènes de cristallisation(s) ou de formation de troubles dans le rétentat ou concentré de nano-filtration (RNF).

2. Procédé selon la revendication 1, **caractérisé en ce qu'**il comprend essentiellement les étapes consistant à :

   - prélever une partie (PJO) du jus originel, éventuellement préclarifié ;
   - soumettre ladite partie de jus (PJO) prélevée à une ultrafiltration sélective générant un rétentat ou concentré (RUF) et un perméat (PUF), l'ultrafiltration mise en oeuvre étant sensiblement perméable aux sucres et fortement imperméable aux autres substances qualitatives du jus, en suspension et/ou dissoutes dans ce dernier ;
   - soumettre le perméat d'ultrafiltration (PUF), après son traitement préventif contre les phénomènes de cristallisation(s) ou de formation de troubles, à une nanofiltration sélective générant un rétentat ou concentré (RNF) et un perméat (PNF), le moyen (NF) de nano-filtration mis en oeuvre étant fortement imperméable aux sucres et sensiblement perméable aux autres substances qualitatives dissoutes du perméat d'ultrafiltration (PUF) ;
   - mélanger le rétentat ou concentré d'ultrafiltration (RUF) et le perméat de nanofiltration (PNF) à la partie du jus originel non prélevée (PJON), pour former un jus de fruits traité (JFT) à teneur en sucres réduite.

3. Procédé selon la revendication 1 ou 2, **caractérisé en ce que**, pour des types donnés de moyens d'ultrafiltration (UF) et de nanofiltration (NF), la quantité de sucres éliminée, et donc la réduction de sucres dans le jus de fruits après traitement, sont contrôlées par le réglage du volume de perméat d'ultrafiltration (PUF).

4. Procédé selon l'une quelconque des revendications 1 à 3, **caractérisé en ce que** le traitement du perméat d'ultra-filtration (PUF) consiste en une étape opératoire choisie dans le groupe formé par : la précipitation préventive de l'un au moins des composés intervenant dans le ou chaque phénomène de cristallisation(s) ou de formation de troubles par ajout contrôlé d'au moins une substance adaptée dans le perméat d'ultrafiltration (PUF) ; l'inhibition du ou des phénomène(s) de cristallisation(s) ou de formation de troubles par ajout contrôlé d'au moins une substance adaptée dans le perméat d'ultrafiltration (PUF) ; la limitation du ou des phénomène(s) de cristallisation ou de formation de troubles concerné(s) par ajout contrôlé d'au moins un produit stabilisant dans le perméat d'ultrafiltration (PUF), l'empêchement de la ou des cristallisation(s) ou formation de troubles par ajout contrôlé d'au moins un produit gélifiant et l'appauvrissement, par exemple par traitement au moyen de résines échangeuses d'ions ou par électrodialyse, du perméat d'ultrafiltration (PUF) par rapport à l'un au moins des composés intervenant dans le ou chaque phénomène de cristallisation ou de formation de troubles concerné.

5. Procédé selon la revendication 4, **caractérisé en ce que** ledit au moins un produit stabilisant ajouté au perméat d'ultrafiltration (PUF) est un produit stabilisant colloïdal, tel que par exemple de l'acide métatartrique, un dérivé cellulosique, de la carboxyméthylcellulose, de la gomme arabique, de la gomme xanthane ou analogues.

6. Procédé selon la revendication 4, **caractérisé en ce que** ledit au moins un produit gélifiant ajouté au perméat d'ultrafiltration (PUF) est choisi dans le groupe formé par les gélatines, les alginates et analogues.

**7.** Procédé selon l'une quelconque des revendications 1 à 6, **caractérisé en ce qu'**il consiste à soumettre à une opération de traitement supplémentaire et/ou de conditionnement le concentré ou rétentat (RNF) provenant de l'opération de nanofiltration sélective.

**8.** Procédé selon l'une quelconque des revendications 1 à 7, **caractérisé en ce qu'**il est exécuté de manière continue, au moins deux des différentes phases opératoires étant effectuées de manière simultanée et le prélèvement étant réalisé pendant une durée déterminée.

**9.** Procédé selon l'une quelconque des revendications 1 à 7, **caractérisé en ce qu'**il est exécuté de manière séquentielle, les différentes phases opératoires étant effectuées à la suite les unes des autres en étant appliquées à une partie du volume du jus originel prélevée en début du cycle opératoire du procédé.

**10.** Dispositif pour la mise en oeuvre du procédé selon l'une quelconque des revendications 1 à 9, **caractérisé en ce qu'**il comprend un module d'ultrafiltration (UF) sensiblement perméable aux sucres et un module de nanofiltration (NF) sensiblement imperméable aux sucres, montés en cascade, ainsi que des moyens pour le traitement du perméat d'ultrafiltration (PUF) en vue de l'élimination ou de la limitation au moins des phénomènes de cristallisation (s) ou de formation de troubles dans le rétentat de nanofiltration (RNF), le module d'ultrafiltration (UF) étant alimenté par des moyens de prélèvement de jus à traiter et les modules d'ultrafiltration (UF) et de nanofiltration (NF) étant pourvus de moyens de déversement, respectivement de concentré ou de rétentat d'ultrafiltration (RUF) et de perméat de nanofiltration (PNF).


**Claims**

**1.** Process for the controlled reduction of the sugar content of fruit juice, in particular grape juice, **characterized in that** it consists in subjecting at least a portion (PJO) of the original fruit juice, if desired pre-clarified, to selective ultra-filtration substantially permeable to sugars, then to a selective nano-filtration substantially impermeable to sugars, and in mixing the twice-filtered permeate (PNF) with the retentate or concentrate of ultra-filtration (RUF) and, if desired, with a portion of the untreated original fruit juice (PJON), the ultra-filtration permeate (PUF) being subjected to a treatment to eliminate or limit the phenomena of crystallization(s) or of formation of troublesome substances in the retentate or concentrate of nano-filtration (RNF).

**2.** Process according to claim 1, **characterized in that** it comprises essentially the steps consisting in: removing a portion (PJO) of the original juice, if desired pre-clarified; subjecting said portion of removed juice (PJO) to selective ultra-filtration, generating a retentate or concentrate (RUF) and a permeate (PUF), the ultra-filtration used being substantially permeable to sugars and highly impermeable to other qualitative substances of the juice, in suspension and/or dissolved in this latter; subjecting the ultra-filtration permeate (PUF), after its preventive treatment against the phenomena of crystallization(s) or the formation of troublesome substances, to a selective nano-filtration, generating a retentate or concentrate (RNF) and a permeate PNF, the nano-filtration means (NF) used being highly impermeable to sugars and substantially permeable to the other dissolved qualitative substances of the ultra-filtration permeate (PUF); mixing the retentate or concentrate of ultra-filtration (RUF) and the nano-filtration permeate (PNF) with the non-removed portion of the original juice (PJON), to form a treated fruit juice (JFT) with a reduced sugar content.

**3.** Process according to claim 1 or 2, **characterized in that**, for given types of ultra-filtration means (UF) and nano-filtration means (NF), the quantity of sugars eliminated, and hence the reduction of sugars in the fruit juice after treatment, are controlled by adjusting the volume of the ultra-filtration permeate (PUF).

**4.** Process according to any one of claims 1 to 3, **characterized in that** the treatment of the ultra-filtration permeate (PUF) consists in an operative step selected from the group formed by: preventive precipitation of at least one of the components taking part in the or each phenomenon of crystallization(s) or formation of troublesome substances, by the controlled addition of at least one suitable substance in the ultra-filtration permeate (PUF); inhibition of the phenomenon or phenomena of crystallization(s) or formation of troublesome substances by controlled addition of at least one suitable substance in the ultra-filtration permeate (PUF); limitation of the phenomenon or phenomena of crystallization(s) or formation of troublesome substances in question by the controlled addition of at least one stabilizing product in the ultra-filtration permeate (PUF), preventing the crystallization or crystallizations or formation of troublesome substances by controlled addition of at least one gellifying product and impoverishing, for example by treatment by means of ion exchange resins or by electro-dialysis, the ultra-filtration permeate (PUF) relative to at least one of the components taking place in the or each phenomenon of crystallization or formation of troublesome substances in question.

5. Process according to claim 4, **characterized in that** said at least one added stabilizing product added to the ultra-filtration permeate (PUF) is a colloidal stabilizing product, such as for example metatartaric acid, a cellulosic derivative, carboxymethylcellulose, gum arabic, xanthan gum or the like.

6. Process according to claim 4, **characterized in that** said at least one gellifying product added to the ultra-filtration permeate (PUF) is selected from the group formed by gelatins, alginates and the like.

7. Process according to any one of claims 1 to 6, **characterized in that** it consists in subjecting to a supplemental treatment operation and/or to packaging the concentrate or retentate (RNF) from the selective nano-filtration operation.

8. Process according to any one of claims 1 to 7, **characterized in that** it is carried out in a continuous manner, at least two of the different operative phases being carried out simultaneously and the removal being carried out during a predetermined time.

9. Process according to any one of claims 1 to 7, **characterized in that** it is carried out sequentially, the different operative phases being carried out one after the other by being applied to a portion of the volume of the original juice, which portion is removed at the beginning of the operative cycle of the process.

10. Device for practising the process according to any one of claims 1 to 9, **characterized in that** it comprises an ultra-filtration module (UF) substantially permeable to sugars and a nano-filtration module (NF) substantially impermeable to sugars, both mounted in cascade, as well as means for the treatment of the ultra-filtration permeate (PUF) for the elimination or limitation of at least the phenomena of crystallization(s) or formation of troublesome substances in the nano-filtration retentate (RNF), the ultra-filtration module (UF) being supplied by means of removal of juice to be treated and the ultra-filtration modules (UF) and nano-filtration modules (NF) being provided with pouring means, respectively of concentrate or retentate of ultra-filtration (RUF) and nano-filtration permeate (PNF).

**Patentansprüche**

1. Verfahren zur kontrollierten Verringerung des Zuckergehalts von Fruchtsäften, insbesondere von Traubensäften, **dadurch gekennzeichnet,**
dass es darin besteht, zumindest einen Teil (PJO) des ursprünglichen Fruchtsaftes, der eventuell vorher geklärt wurde, einer selektiven im Wesentlichen für Zucker durchlässigen Ultrafiltration, dann einer im Wesentlichen für Zucker undurchlässigen Nanofiltration zu unterziehen und das doppelt gefilterte Permeat (PNF) mit dem Retentat oder Konzentrat der Ultrafiltration (RUF) und eventuell mit dem nicht behandelten Teil des ursprünglichen Fruchtsaftes (PJON) zu mischen, wobei das Permeat der Ultrafiltration (PUF) einer Behandlung unterzogen wird, um die Phänomene von Kristallisation(en) oder Bildung von Trübungen in dem Retentat oder Konzentrat der Nanofiltration (RNF) zu beseitigen oder zu begrenzen.

2. Verfahren nach Anspruch 1, **dadurch gekennzeichnet,**
dass es im Wesentlichen die folgenden Schritte umfasst, darin bestehend:

- einen Teil (PJO) des ursprünglichen Saftes, der eventuell vorher geklärt wurde, zu entnehmen,
- den entnommenen Teil des Saftes (PJO) einer selektiven Ultrafiltration zu unterziehen, die ein Retentat oder Konzentrat (RUF) und ein Permeat (PUF) erzeugt, wobei die eingesetzte Ultrafiltration im Wesentlichen für Zucker durchlässig und für die anderen qualitativen Substanzen des Saftes, die in diesem letztgenannten in Suspension und/oder gelöst sind, stark undurchlässig ist;
- das Permeat der Ultrafiltration (PUF) nach seiner vorbeugenden Behandlung gegen die Phänomene von Kristallisierung(en) oder Bildung von Trübungen einer selektiven Nanofiltration zu unterziehen, die ein Retentat oder Konzentrat (RNF) und ein Permeat (PNF) bildet, wobei das eingesetzte Nanofiltrationsmittel (NF) für Zucker stark undurchlässig und im Wesentlichen für die anderen qualitativen gelösten Substanzen des Permeats der Ultrafiltration (PUF) durchlässig ist;
- das Retentat oder Konzentrat der Ultrafiltration (RUF) und das Permeat der Nanofiltration (PNF) mit dem nicht entnommenen Teil des ursprünglichen Saftes (PJON) zu mischen, um einen behandelten Fruchtsaft (JFT) mit verringertem Zuckergehalt zu bilden.

3. Verfahren nach Anspruch 1 oder 2,
   **dadurch gekennzeichnet,**
   **dass** für gegebene Typen von Ultrafiltrations- (UF) und Nanofiltrationsmitteln die Menge an beseitigtem Zucker und somit die Zuckerverringerung im Fruchtsaft nach der Behandlung durch Einstellung des Volumens des Ultrafiltrationspermeats (PUF) kontrolliert wird.

4. Verfahren nach einem der Ansprüche 1 bis 3,
   **dadurch gekennzeichnet,**
   **dass** die Behandlung des Ultrafiltrationspermeats (PUF) in einem Verfahrensschritt besteht, der aus der Gruppe ausgewählt wird, die gebildet ist von: der vorbeugenden Ausfällung von mindestens einer der Verbindungen, die bei dem oder jedem Phänomen von Kristallisation(en) oder Bildung von Trübungen vorkommen, durch kontrollierte Beigabe einer geeigneten Substanz zu dem Ultrafiltrationspermeat (PUF); Hemmung des oder der Phänomens(e) von Kristallisation(en) oder Bildung von Trübungen durch kontrollierte Beigabe von mindestens einer geeigneten Substanz zu dem Ultrafiltrationspermeat (PUF); Begrenzung des oder der betreffenden Phänomens(e) von Kristallisation oder Bildung von Trübungen durch kontrollierte Beigabe von mindestens einem Stabilisator zu dem Ultrafiltrationspermeat (PUF), Verhinderung der Kristallisation(en) oder Bildung von Trübungen durch kontrollierte Beigabe von mindestens einem Geliermittel und Abreicherung, beispielsweise durch eine Behandlung mit Hilfe von Ionenaustauschharzen oder durch Elektrodialyse, des Ultrafiltrationspermeats (PUF) im Verhältnis zu mindestens einer der Komponenten, die bei dem oder jedem betreffenden Phänomen der Kristallisierung oder Bildung von Trübungen vorkommen.

5. Verfahren nach Anspruch 4,
   **dadurch gekennzeichnet,**
   **dass** der mindestens eine Stabilisator, der dem Ultrafiltrationspermeat (PUF) hinzugefügt wird, ein kolloidaler Stabilisator ist, wie beispielsweise Metaweinsäure, ein Zellulosederivat, Carboxymethylzellulose, Arabisches Gummi, Xanthangummi oder dergleichen.

6. Verfahren nach Anspruch 4,
   **dadurch gekennzeichnet,**
   **dass** das mindestens eine Geliermittel, das dem Ultrafiltrationspermeat (PUF) hinzugefügt wird, in der Gruppe ausgewählt wird, die von den Gelatinen, den Alginaten und dergleichen gebildet ist.

7. Verfahren nach einem der Ansprüche 1 bis 6,
   **dadurch gekennzeichnet,**
   **dass** es darin besteht, das Konzentrat oder Retentat (RNF), das aus dem Vorgang der selektiven Nanofiltration kommt, einer zusätzlichen Behandlung und/oder Aufbereitung zu unterziehen.

8. Verfahren nach einem der Ansprüche 1 bis 7,
   **dadurch gekennzeichnet,**
   **dass** es kontinuierlich durchgeführt wird, wobei mindestens zwei der unterschiedlichen Betriebsphasen gleichzeitig durchgeführt werden und die Entnahme während einer bestimmten Dauer erfolgt.

9. Verfahren nach einem der Ansprüche 1 bis 7,
   **dadurch gekennzeichnet,**
   **dass** es sequentiell durchgeführt wird, wobei die verschiedenen Betriebsphasen nacheinander erfolgen, wobei sie an einen Teil des Volumens des ursprünglichen Saftes, der zu Beginn des Betriebszyklus des Verfahrens entnommen wird, angelegt werden.

10. Vorrichtung für den Einsatz des Verfahrens nach einem der Ansprüche 1 bis 9,
    **dadurch gekennzeichnet,**
    **dass** es ein Ultrafiltrationsmodul (UF), das im Wesentlichen für Zucker durchlässig ist, und ein Nanofiltrationsmodul (NF), das im Wesentlichen für Zucker undurchlässig ist, die kaskadenartig montiert sind, sowie Mittel für die Behandlung des Ultrafiltrationspermeats (PUF) umfasst, um zumindest die Phänomene von Kristallisierung(en) oder Bildung von Trübungen im Nanofiltrationsretentat (RNF) zu beseitigen oder zu begrenzen, wobei das Ultrafiltrationsmodul (UF) durch Mittel zur Entnahme von zu behandelndem Saft gespeist werden und die Ultrafiltrations-(UF) und Nanofiltrationsmodule (NF) mit Mitteln zum Ausschütten von Ultrafiltrationskonzentrat bzw. -retentat (RUF) oder Nanofiltrationspermeat (PNF) versehen sind.

Jus à traiter

PJON

RUF

UF

PJO

Etape 1

PUF

perméat UF

RNF

NF

PUF

Concentré NF
Sucres éliminés

Etape 2

PNF

perméat NF

Jus traité

JFT